**Europäisches Patentamt**

**European Patent Office**

**Office européen des brevets**

(11) Veröffentlichungsnummer: **0 088 277**
**B1**

(12) ## EUROPÄISCHE PATENTSCHRIFT

(45) Veröffentlichungstag der Patentschrift:
**14.05.86**

(51) Int. Cl.⁴: **H 02 M 7/5395**

(21) Anmeldenummer: **83101653.0**

(22) Anmeldetag: **21.02.83**

(54) **Verfahren und Vorrichtung zum Umwälzen des Wärmeträgers in einem Heizungsrohrsystem.**

(30) Priorität: **08.03.82 DE 3208289**

(43) Veröffentlichungstag der Anmeldung:
**14.09.83 Patentblatt 83/37**

(45) Bekanntmachung des Hinweises auf die Patenterteilung:
**14.05.86 Patentblatt 86/20**

(84) Benannte Vertragsstaaten:
**AT BE CH DE FR GB LI NL SE**

(56) Entgegenhaltungen:
**DE - A - 3 002 411**
**GB - A - 2 007 043**
**GB - A - 2 026 262**
**GB - A - 2 030 797**

(73) Patentinhaber: **Siemens Aktiengesellschaft, Berlin und München Wittelsbacherplatz 2, D-8000 München 2 (DE)**

(72) Erfinder: **Klausecker, Karl, Dipl.-Ing., Killingerstrasse 47, D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

1. Die Erfindung betrifft ein Verfahren zum Umwälzen des Wärmeträgers in einem Heizungsrohrsystem mittels einer Umwälzpumpe und eine Antriebsvorrichtung für eine Umwälzpumpe zur Durchführung des Verfahrens.

Heizungssysteme für Gebäude enthalten üblicherweise ein geschlossenes Rohrsystem, in dem ein Wärmeträger, z. B. Warmwasser, durch einen ersten Wärmetauscher (etwa einen Heizungskessel oder einen Sonnenkollektor) geleitet wird und dabei Wärme aufnimmt, die er dann anschliessend beim Durchströmen eines zweiten Wärmetauschers (Heizkörper) an die Umgebung abgibt. Der Transport des erwärmten Wassers zu den Heizkörpern erfolgt durch Umwälzpumpen und die Wärmeabgabe an die Umwelt (Heizleistung) des Systems wird durch Ventile an den Heizkörpern geregelt, die den Durchfluss mehr oder weniger drosseln. Die Umwälzpumpe ist so auszulegen, dass sie bei kalten Umgebungstemperaturen, bei denen alle Heizkörperventile voll geöffnet werden müssen, noch einen ausreichenden Förderdruck bzw. Durchfluss des Warmwassers ermöglicht. Derart extreme Umgebungstemperaturen liegen jedoch nur an wenigen Tagen des Jahres vor. Während der restlichen Betriebszeit der Heizungsanlage sind die Heizkörper teilweise oder ganz geschlossen und eine ungeregelte oder ungesteuerte Umwälzpumpe fördert zu viel. Dabei entstehen störende Strömungsgeräusche, ausserdem arbeiten die Pumpen mit einem ungünstigen Wirkungsgrad, da die Pumpenkennlinie der Anlagenkennlinie für diese veränderten Belastungen nicht angepasst ist. Es wird dann zu viel Energie verbraucht.

Angesichts steigender Energiekosten ist man zunehmend bereit, die Mehrkosten für eine heizleistungsabhängige Veränderung der Pumpenleistung in Kauf zu nehmen. Dabei könnte die Pumpe mit einem drehzahlgesteuerten Gleichstrommotor angetrieben werden, mit der Erfindung soll jedoch die Möglichkeit eröffnet werden, handelsübliche Drehstrommaschinen wirtschaftlich einzusetzen. Dabei scheiden mehrfach polumschaltbare Antriebe, die die Drehzahl der Pumpe in Stufen verstellen, wegen der erforderlichen Relaisschaltungen aus, die gegenwärtig relativ aufwendig und störanfällig erscheinen.

Für andere Zwecke sind bereits drehzahlveränderliche Antriebe entwickelt, die nicht nach dem Prinzip der Polumschaltung arbeiten. Ein solcher Antrieb enthält eine Drehfeldmaschine, deren Speisespannung von einem Wechselrichter geliefert und proportional der gewünschten Drehzahl verändert wird. Vorzugsweise werden Wechselrichter verwendet, bei denen jeder Wechselspannungsausgang über einen Wechselrichterschalter in einem hochfrequenten Takt alternierend auf den positiven und negativen Gleichspannungseingang geschaltet werden und die Dauer jedes Schaltzustandes so gewählt wird, dass sich eine pulsbreitenmodulierte Ausgangsspannung der gewünschten Kurvenform ergibt.

Im Hinblick auf ein oberschwingungsarmes Drehmoment und eine optimale Ausnutzung von Umrichter und Maschine ist für die Ausgangswechselspannung bei diesen handelsüblichen Antrieben ein möglichst sinusförmiger Verlauf anzustreben. Dazu wird für jeden Wechselspannungsausgang eine entsprechende sinusförmige Steuerspannung erzeugt, deren Schnittpunkte mit einer hochfrequenten Dreieckspannung die Umschaltimpulse für den auf den jeweiligen Wechselrichterausgang arbeitenden Wechselrichterschalter liefert und somit die Länge der einzelnen, zu der modulierten Ausgangsspannung zusammenzusetzenden Spannungspulse bestimmt.

Dem Wechselrichter ist die Eingangsgleichspannung annähernd konstant eingeprägt, z. B. indem der Wechselrichtereingang über einen Spannungszwischenkreis mit dem Gleichspannungsausgang eines an eine Versorgungswechselspannung angeschlossenen Gleichrichters verbunden ist. Bei Verwendung einer Asynchronmaschine wird im allgemeinen eine mit abnehmender Drehzahl proportional abnehmende Amplitude der Speisespannung benötigt, wobei lediglich zu den niedrigsten Drehzahlen hin eine unterproportionale Abnahme der Spannungsamplitude vorgesehen ist. Die entsprechende Amplitudensteuerung der Ausgangswechselspannung kann dadurch erreicht werden, dass das Verhältnis von Sinusamplitude zur Amplitude der als Tastspannung verwendeten Dreieckspannung verändert wird. Das Frequenzverhältnis zwischen Dreieckspannung und Ausgangsspannung bestimmt die Zahl der Umschaltvorgänge jedes Schalters innerhalb einer Spannungsperiode und damit die Annäherung an die Sinusform. Die Dreieckfrequenz aber kann nicht beliebig hoch gewählt werden, da sonst zu viele Schaltvorgänge mit hohen Schaltverlusten und einer thermischen Zerstörung der Umrichterschalter auftreten. Als Umrichterschalter werden üblicherweise Thyristoren verwendet, bei denen zusätzlich eine gewisse Mindestdauer für jeden Umschaltvorgang eingehalten werden muss, so dass die Tastfrequenz praktisch 400 Hz nicht wesentlich überschreiten kann.

Für den eingangs geschilderten Betrieb einer Umwälzpumpe ist z. B. eine dreiphasige Asynchronmaschine geeignet, die mit einem symmetrischen System aus drei gepulsten, bei hoher Modulationsfrequenz praktisch sinusförmigen Phasenspannungen gespeist ist. Die Erzeugung des Sinusspannungssystems mittels eines Pulswechselrichters ist jedoch verhältnismässig aufwendig, da drei um 120° el. gegeneinander versetzte Steuerspannungen in der Wechselrichtersteuerung erzeugt werden müssen. Dabei ist zu berücksichtigen, dass der Wechselrichter auf Vollast (Nennbetrieb) des Antriebs auszulegen ist, aber die Grundschwingungsamplitude bei üblichen Steuerverfahren zur Erzeugung sinusförmiger Ausgangsspannungen nicht die Werte erreicht, die bei einer vollen Spannungsausnutzung des Umrichters möglich sind. Der Energieeinsparung durch die heizleistungsabhängige Drehzahlsteuerung der Umwälzpumpe steht daher der höhere Fertigungsaufwand entgegen.

Ferner ist zu beachten, dass das Drehmoment des Antriebs umso mehr Oberschwingungen aufweist, je stärker von der Sinusform der Speisespannungen abgewichen wird. Damit wächst aber die Gefahr, dass im Heizungsrohrsystem Körperschall-Schwingungen auftreten, die zu einer unerträglichen Lärmbelastung der Umwelt führen können.

Die Erfindung ermöglicht nun den wirtschaftlichen Einsatz einer Asynchronmaschine, wobei auch eine erhöhte Lärmbelastung vermieden wird. Der Aufwand kann dabei so klein gehalten werden, dass die für den Pumpenantrieb im Vergleich zu den marktüblichen Umwälzpumpen erforderlichen Mehrkosten durch die Energieeinsparung ausgeglichen werden, die z. B. im gemässigten Klima bei einer Gebäudeheizung in drei Heizungsperioden erzielt wird.

Das wird gemäss der Erfindung erreicht durch ein Verfahren und eine Antriebsvorrichtung mit den Merkmalen der Ansprüche 1 bzw. 6.

Dementsprechend wird die Umwälzpumpe von einer Asynchronmaschine angetrieben, die über einen einen Pulswechselrichter enthaltenden Umrichter mit Gleichspannungszwischenkreis aus einem Wechselspannungsnetz gespeist ist. Die Frequenz der Wechselrichter-Ausgangsspannung wird proportional einer gewünschten Drehzahl vorgegeben und auch deren Amplitude ist – zumindest im oberen Drehzahlbereich – ebenfalls proportional der gewünschten Drehzahl. Für die Steuerung der Ausgangsspannung des Wechselrichters wird dabei Gebrauch gemacht von einem binären frequenzunabhängigen Steuermuster für die Ausgangsspannungen, das mit einem höher frequenten Taktsignal moduliert wird, wie dies aus der DE-A-3002411 bekannt ist. Für jeden Wechselrichterausgang ist als Referenzspannung jeweils eine Sollspannung mit einer für alle Frequenzen und alle Wechselrichterausgänge gleichen Kurvenform vorgegeben. Für diese Sollspannung sind nur zwei Spannungswerte, z. B. «positiv» und «negativ», zugelassen («binäre Kurve»). Gegenüber einer Vollblocksteuerung, bei der in der ersten Halbperiode (also zwischen den Phasen 0 und 180° der Grundschwingung am entsprechenden Wechselrichterausgang) eine positive Spannung und während der zweiten Halbperiode (zwischen 180 und 360°) eine negative Spannung erzeugt wird, sind zu bestimmten Phasenlagen, die unabhängig von der Drehzahl vorgegeben werden, Lücken vorgesehen, in denen die Spannung jeweils den entgegengesetzten binären Zustand aufweist. Die Lücken liegen jeweils in der Nähe der Nulldurchgänge der Ausgangsspannungs-Grundschwingung und sind mit einer Viertelperioden-Symmetrie angeordnet, d. h. sie liegen symmetrisch bezüglich der Nulldurchgänge und der Maxima der Grundschwingung. Die Summe der Lückenbreiten innerhalb jeder Halbperiode ist wesentlich kleiner als die Breite des lückenfreien Bereiches in der Mitte jeder Halbperiode.

Die Sollspannung stellt somit wegen der Breite des lückenfreien Bereiches im wesentlichen eine Vollblocksteuerung dar, die lediglich an den Blockflanken Lücken aufweist. Dies ermöglicht fast die bei Vollblocksteuerung erreichbare maximale Spannungsausnutzung des Umrichters. Der Nachteil einer Vollblocksteuerung ist allerdings ein hoher Oberschwingungsgehalt der Ausgangsströme, der zu Energieverlusten in Umrichter und Maschine sowie zur Anregung von Resonanzfrequenzen im Heizungsrohrsystem und damit zu Lärmbelastung führen könnte. Beides wird durch die vorgesehenen Lücken vermieden, die eine gewisse Annäherung der Vollblocksteuerung an die Sinusform darstellen. Zwar können durch die Lücken im Oberschwingungsspektrum bei Vollblocksteuerung vorhandene Oberschwingungen verstärkt werden und ausserdem ändern sich die Oberschwingungsfrequenzen in dem Masse, in dem die Grundfrequenz mit der gewünschten Drehzahl verschoben wird. Durch die Wahl der Lücken kann jedoch erreicht werden, dass die Oberschwingungen bei allen Lastzuständen in einem Bereich liegen, in dem keine Körperschall-Anregung im Rohrsystem auftritt.

Aus der jeweiligen Sollspannung für den betreffenden Wechselrichterausgang wird mittels einer hochfrequenten Tastspannung ein pulsbreitenmoduliertes Steuersignal zum Umschalten des auf den betreffenden Wechselrichterausgang arbeitenden Wechselrichterschalters gebildet, wobei das Pulsbreitenverhältnis entsprechend der gewünschten Amplitude vorgegeben ist. So kann z. B. die binäre Sollspannung mit einer hochfrequenten Dreieckspannung, deren Amplitude proportional der drehzahlabhängig vorgegebenen Wechselspannungsamplitude ist, verglichen werden, um aus den Schnittpunkten die Umschaltbefehle des Wechselrichterschalters zu bilden. Man kann aber auch vorteilhaft eine Dreieckspannung konstanter Amplitude mit einer Amplitudenspannung vergleichen und das Vergleichsergebnis, das ein entsprechend der gewünschten Amplitude pulsbreitenmoduliertes binäres Gleichspannungssignal darstellt, zusammen mit der binären Sollspannung einem EXKLUSIV-ODER-Gatter zuführen, an dessen Ausgang dann die pulsbreitenmodulierte Sollspannung als Steuersignal für den Wechserslrichterschalter ansteht.

Auch die Pulsbreitenmodulation kann, ebenso wie die binäre Sollspannungskurve, zu Anregungen von Schallfrequenzen im Rohrsystem führen. Dies wird jedoch vermieden, wenn die Tastfrequenz stets höher als 5 kHz beträgt.

Die Steuerung des Pulswechselrichters wird besonders einfach, wenn die Tastspannung drehzahlunabhängig vorgegeben wird, z. B. zu etwa 6 kHz. Der Pulswechselrichter kann ohne Schwierigkeiten mit derart hohen Tastfrequenzen betrieben werden, wenn als Wechselrichter ein Wechselrichter mit Schaltern aus Leistungstransistoren verwendet wird. Ein derartiger Transistor-Wechselrichter ist z. B. in der DE-A-3030485 beschrieben.

Nach diesem Verfahren kann die Umwälzpumpe mit einer Drehzahl angetrieben werden, die in Abhängigkeit von der Heizleistung des Heizungsrohrsystems vorgegeben wird. Die Drehzahl kann z. B. in Abhängigkeit von der Temperaturdifferenz am Eingang und Ausgang der Heizkörper, d. h. im Vorlauf und Rücklauf des Wärmeträgers, gesteuert oder geregelt werden, insbesondere kann die Drehzahl aber auch in Abhängigkeit von der Fördermenge und/oder dem Förderdruck der Umwälzpumpe verändert werden.

Anhand eines Ausführungsbeispiels und 5 Figuren ist die Erfindung näher erläutert.

Fig. 1 zeigt ein Heizungsrohrsystem mit einer Umwälzpumpe, die mit einer Antriebsvorrichtung gemäss der Erfindung versehen ist;

Fig. 2 zeigt eine Antriebsvorrichtung für die Umwälzpumpe und dient zur Verdeutlichung eines bevorzugten Ausführungsbeispiels;

Fig. 3 zeigt verschiedene Impulsmuster für die Steuerspannung des Wechselrichters;

Fig. 4 veranschaulicht die Tastung der entspre-chend dem Pulsmuster vorgegebenen Steuer-spannung zur Erzeugung der pulsbreitenmodu-lierten Ausgangsspannung, und

Fig. 5 zeigt die entsprechende Steuerung des Pulswechselrichters.

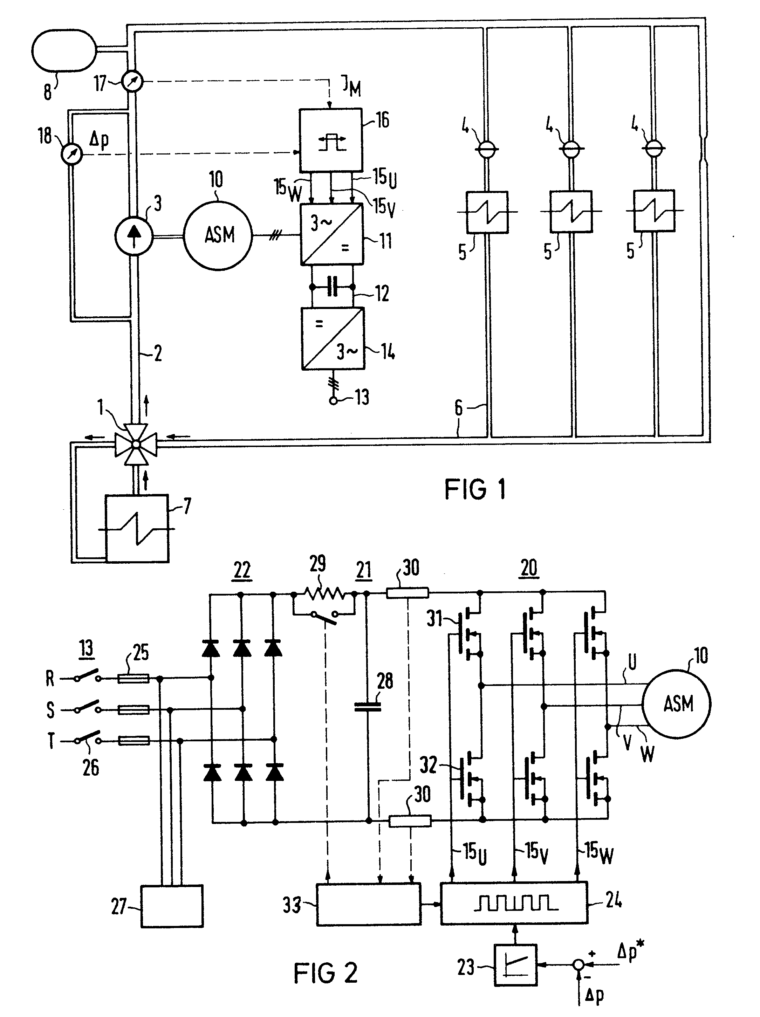

Gemäss Fig. 1 ist in dem von einem Mischventil 1 kommenden Vorlauf-Rohr 2 eines geschlossenen Heizungsrohrsystems, eine Umwälzpumpe 3 angeordnet, durch die der erwärmte Wärmeträger zu den Einlassventilen 4 mehrerer Wärmetauscher 5 (Heizkörper einer Raumheizung) gefördert wird. Von den Wärmetauschern 5 führt ein Rücklaufsystem 6 zurück zum Mischventil 1, das als Vierwegeventil ausgebildet ist und gestattet, einen Teil des in den Wärmetauschern 5 abgekühlten Wärmeträgers in einen anderen Wärmetauscher 7 (Heizungskessel) zu leiten und gegen erwärmtes Wasser auszutauschen. Mit 8 ist das Ausgleichsgefäss des Heizungsrohrsystems bezeichnet.

Die Umwälzpumpe 3 wird von einer Asynchronmaschine 10 angetrieben, die von der Ausgangswechselspannung eines Pulswechselrichters 11 gespeist ist. Der Wechselrichter ist als Teil eines Umrichters über einen Gleichspannungszwischenkreis 12 an einen von einem Versorgungsnetz 13 gespeisten Gleichrichter 14 angeschlossen.

Die Wechselrichterschalter des Wechselrichters 11 werden mittels Steuerleitungen $15_U$, $15_V$, $15_W$ mit entsprechenden Umschaltimpulsen angesteu-ert, die von der Wechselrichtersteuerung 16 geliefert werden. Der Wechselrichtersteuerung kann als Führungsgrösse der Durchfluss $J_M$ des Wärmeträgers zugeführt werden, der mittels eines im Vorlaufsystem 2 angeordneten Durchflussmengenmessers 17 erfasst wird. Zusätzlich oder alternativ ist vorgesehen, den Förderdruck der Umwälzpumpe mittels eines parallel angeordneten Differenzdruckmessers 18 zu erfassen.

Die Antriebsvorrichtung für die Umwälzpumpe enthält die Asynchronmaschine 10, den aus dem Wechselspannungsnetz 13 gespeisten Umrichter mit dem Pulswechselrichter 20, der über den Spannungszwischenkreis 21 mit dem Gleichrichter 22 verbunden ist, einen Drehzahlgeber 23 und die Umrichtersteuerung 24, wie in Fig. 2 dargestellt ist.

Der Gleichrichter 22 ist als ungesteuerte Gleichrichterbrücke ausgeführt, die über Sicherungen 25 und Umrichterschalter 26 an die Phasen R, S, T des Netzes 13 angeschlossen ist. Ein Stromversorgungsteil 27 liefert die Versorgungsspannung für die Steuerung. Der Zwischenkreis 21 enthält den Zwischenkreiskondensator 28, der über einen nach einer Verzögerungszeit kurzschliessbaren Vorwiderstand 29 aufgeladen wird. Ferner sind zwei Mess-Shunts vorgesehen, um mittels des Schütz 33 das Kurzschliessen des Vorwiderstandes 29 und das Ein- und Ausschalten des Wechselrichters 20 vorzunehmen. Dadurch ist auch ein Abschalten des Wechselrichters bei einer Störung möglich.

Die Wechselspannungsausgänge U, V, W des Wechselrichters 20 sind jeweils über einen Wech-selrichterschalter alternierend an die Gleichspan-nungsausgänge des Zwischenkreises 21 ange-schlossen. Jeder Wechselrichterschalter wird über ein binäres Ansteuersignal (Leitungen $15_U$, $15_V$, $15_W$) angesteuert und enthält jeweils zwei Leistungs-Feldeffekttransistoren, wie sie z. B. unter dem eingetragenen Warenzeichen «Sipmos» der Firma Siemens handelsüblich sind. So ist der Wechselrichterausgang U z. B. über den FET 31, der mit dem «1»-Zustand der Signalleitung $15_U$ angesteuert ist, mit dem positiven Gleichspannungspol und über den FET 32, der mit dem «0»-Zustand angesteuert ist, mit dem negativen Gleichspannungspol verbunden. Ein derartiger Leistungs-FET besitzt entgegen seiner Stromführungsrichtung eine Diodenkennlinie, wie durch den entsprechenden Pfeil im Schaltsymbol dargestellt ist. Mit einem derartigen Transistorschalter kann ein eingeschalteter Strom im Gegensatz zu Thyristoren auch abgeschaltet werden. Antiparallele Dioden sowie Entlastungsnetzwerke sind nicht erforderlich. Die Ansteuerung ist einfach und verlustarm. In Verbindung mit einem ungesteuerten Eingangsgleichrichter ergibt sich dabei eine kostengünstige Lösung mit geringem Aufwand an Leistungsbauteilen und Montage sowie einem hohen Leistungsfaktor für den Netzstrom.

Als Drehzahlgeber zur Erzeugung eines von der Heizleistung abhängigen Drehzahlsollwertes kann z. B. ein Regler 23 verwendet werden, dem die Regelabweichung zwischen dem Differenzdruck-Istwert $\Delta p$ und dem Differenzdruck-Sollwert $\Delta p^*$ an der Umwälzpumpe zugeführt wird. Ebenso kann ein Durchflussregler vorgesehen sein, der den Differenzdruckregler 23 ersetzen oder überlagern kann.

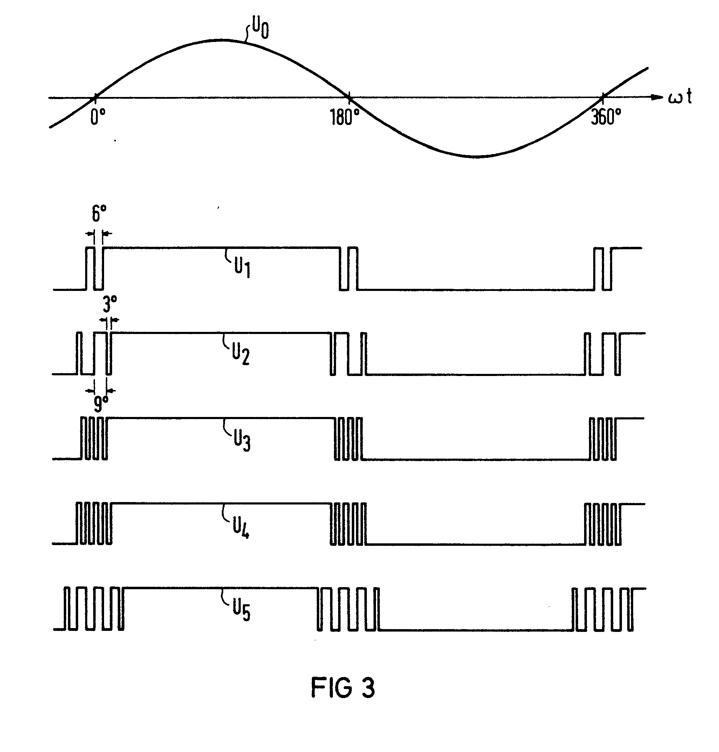

Der Pulswechselrichter erzeugt bei dem erfindungsgemässen Verfahren eine Speisespannung für die Asynchronmaschine, für die in Fig. 3 ver-schiedene Möglichkeiten des Kurvenverlaufs an-gegeben sind.

Mit $U_O$ ist in der obersten Zeile der Fig. 3 die Grundschwingung der Ausgangsspannung dargestellt, auf deren Nullpunkt sich alle folgenden Phasenangaben beziehen. Während bei der anfangs erwähnten, üblichen Pulswechselsteuerung diese

Kurve $U_0$ bereits die Sollkurve darstellt, die mittels einer höherfrequenten Tastfrequenz abgetastet wird, um eine annähernd sinusförmige Ausgangsspannung zu erhalten, stellen die in Fig. 3 angeführten Kurvenformen $U_1$ bis $U_5$ im Grunde bereits eine gepulste Spannung dar und werden bei der erfindungsgemässen Steuerung als Sollkurve für die Ausgangsspannung ihrerseits noch durch die hochfrequente Tastfrequenz pulsbreitenmoduliert. Für den Verlauf der Spannung, z. B. am Ausgang U des Pulswechselrichters, wird eine der Sollkurven $U_1$ bis $U_5$ vorgegeben, die für $\varphi = 0...180°$ im wesentlichen positiv und für $\varphi = 180°...360°$ im wesentlichen negativ ist. Symmetrisch um $\varphi = 0°$, $90°$, $180°$ und $270°$ sind jeweils Pulslücken vorgesehen, deren Pulsbreiten $3°$ oder $6°$ betragen. Bei den Kurven $U_1$ und $U_3$ beginnt jede Halbperiode mit einer Lücke, die Summe der Lückenbreiten in jeder Viertelperiode (d. h. zwischen $0°$ und $90°$) beträgt $6°$. Kurvenformen mit mehr als 3 Lücken und einer Gesamt-Lückenbreite über $12°$ pro Viertelperiode sind möglich, werden aber als weniger vorteilhaft angesehen. Im Hinblick auf eine gute Spannungsausnutzung sowie geringe Stromoberschwingungen und Schallresonanz-Anregungen haben sich die Kurven $U_1$, $U_2$ und $U_3$ bewährt. Die Pulsbreiten von $3°$ oder $6°$ ergeben sich daraus, dass für die Sollkurve ein zeitliches Auflösungsvermögen ausreicht, das einer Aufteilung einer Sollperiode in 120 Zeitschritte entspricht.

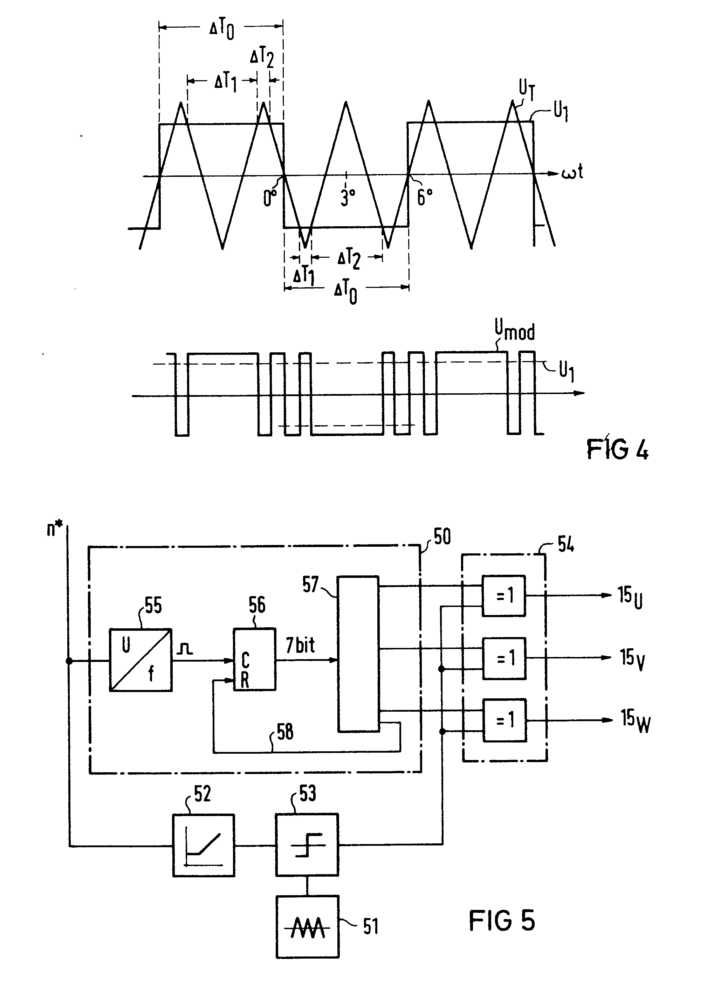

Fig. 4 erläutert, wie durch Abtasten einer Sollspannung, z. B. $U_1$, mit der hochfrequenten Tastspannung $U_T$ jeweils bei Gleichheit beider Spannungen die Umschaltimpulse für den Wechselrichterschalter gebildet werden können. Am Ausgang eines entsprechenden Vergleichers entsteht dadurch eine modulierte, binäre Sollspannung $U_{mod}$, die im gezeigten Fall als Ansteuerspannung für den Wechselrichterschalter 31, 32 (Fig. 2) des Wechselrichterausgangs U während der Zeiten $\Delta T_1$ auf den positiven Gleichspannungseingang und während der Zeiten $\Delta T_2$ an den negativen Gleichspannungseingang legt. Die modulierte Sollspannung $U_{mod}$ stellt also sozusagen eine «doppelt modulierte» Spannung mit einer ersten, $2 \Delta T_0$ entsprechenden Modulationsfrequenz und einer zweiten, höheren Modulationsfrequenz $U_T$ (entsprechend $\Delta T_1 + \Delta T_2$). Diese «zweite» Modulation ist erforderlich, um die Amplitude der Ausgangsspannung proportional zu dem Modulationsverhältnis $(\Delta T_1 - \Delta T_2)/(\Delta T_1 + \Delta T_2)$ einzustellen, das durch das Amplitudenverhältnis von Tastspannung und Sollspannung gegeben ist.

Die Form der Sollkurve $U_1$ ist unabhängig von der Drehzahl vorgegeben, während ihre Periodendauer durch die geforderte Grundschwingungsperiode der Ausgangsspannung bestimmt und somit mit der geforderten Drehzahl veränderlich ist. Bei einer Maschine, die ihre Vollaussteuerung (Nenndrehzahl 2850 U/min) bei einer Speisefrequenz von 50 Hz erreicht, entspricht die Lückendauer von $6°$ einer «ersten» Modulationsfrequenz von etwa 1,5 kHz. Im Teillastbereich ergeben sich wegen der drehzahlabhängigen Veränderung der Grundschwingungsperiode entsprechend längere Lückendauern mit niedrigeren Frequenzen. In diesem Frequenzbereich liegen aber auch die Resonanzfrequenzen des Heizungsrohrsystems, das z.B. etwa bei 1,8 kHz starke Resonanz zeigt. So hat sich z. B. herausgestellt, dass bei einer rein sinusförmigen Sollkurve oder einer der Vollblocksteuerung entsprechenden Sollkurve, die jeweils mit einer drehzahlproportionalen Tastfrequenz pulsbreitenmoduliert wird, nicht nur bei 1,8 kHz, sondern immer dann, wenn die Tastfrequenz unter 5 kHz absinkt, eine erhebliche Lärmbelastung auftritt, die umso unangenehmer empfunden wird, als die sich entsprechend der heizleistungsabhängig vorgegebenen Drehzahl in ihrem Frequenzspektrum ständig ändert.

Es hat sich jedoch gezeigt, dass durch die geschilderte Form der Sollspannung im Zusammenwirken mit der für die Amplitudensteuerung vorgesehenen Pulsbreitenmodulation bei Modulationsfrequenzen über 5 kHz lediglich eine tolerierbare Lärmbelästigung auftritt. Die insgesamt im Oberschwingungsspektrum der modulierten Sollspannung auftretenden Frequenzen und die dadurch hervorgerufenen Stromoberschwingungen liegen vielmehr in einem Bereich, in dem sie das Heizungsrohrsystem nicht mehr wesentlich zum Schwingen anregen können. So werden z. B. bei den Kurvenformen $U_2$ und $U_3$ die Oberschwingungen 5., 7. und 11. Ordnung gegenüber der erwähnten Vollblocksteuerung weniger stark angeregt, während höhere Frequenzen (z. B. 17. und 19. Ordnung) wesentlich stärker hervortreten, ohne jedoch das Heizungsrohrsystem zu Schallschwingungen anzuregen.

Um sicherzustellen, dass die Tastfrequenz ihrerseits im gesamten Lastbereich das Heizungsrohrsystem nicht anregen kann, ist vorgesehen, dass die Tastfrequenz stets über einem Minimalwert von vorzugsweise 5 kHz liegt. Das kann dadurch leicht erreicht werden, dass die Tastfrequenz drehzahlunabhängig, z. B. zu etwa 6 kHz, vorgeben wird.

Die bei der Vorrichtung nach Fig. 2 verwendete Wechselrichtersteuerung 24 ist im wesentlichen in Fig. 5 dargestellt. Der Drehzahlsollwert n* wird als Drehzahlsteuerspannung einem ersten Funktionsgeber 50 eingegeben, der die zwischen zwei binären Spannungswerten alternierende Sollspannung mit einer dem Drehzahlsollwert entsprechenden Frequenz und einer frequenzunabhängigen Kurvenform erzeugt.

Ein zweiter Frequenzgeber 51 erzeugt die hochfrequente Tastspannung $U_T$. Die Drehzahlsteuerspannung ist ferner einem Kennliniengeber 52 eingegeben, der entsprechend dem bei Asynchronmaschinen einzuhaltenden Zusammenhang zwischen Spannungsfrequenz und Amplitude eine Referenzspannung (Amplitudensteuerspannung) erzeugt, die bei höheren Drehzahlen proportional der Drehzahl ist und zu niedrigeren Drehzahlen unterproportional abnimmt.

Tastspannung und Referenzspannung sind einem Schwellwertgeber 53 mit einem binären Ausgangssignal zugeführt, das anzeigt, ob der Momentanwert der Dreieckspannung grösser oder kleiner ist als die Referenzspannung. Kennliniengeber und Schwellwertdetektor stellen eine Modulationsstufe dar, die durch Vergleich der Tastspannung mit der vom Drehzahlsollwert abhängigen Amplitudensteuerspannung pulsbreitenmodulierte Impulse erzeugt, mit denen eine Logikschaltung 54 aus der im ersten Funktionsgeber 50 erzeugten Steuerspannung für einen Wechselrichterschalter (Ansteuerleitung $15_U$) eine pulsbreitenmodulierte Steuerspannung bildet, mit der der betreffende Wechselrichterschalter umgeschaltet wird. Die anderen Ansteuerleitungen ($15_V$, $15_W$) erhalten Steuerspannungen, die jeweils um 120° gegenüber der Steuerspannung an der Ansteuerleitung $15_U$ phasenverschoben sind.

Vorteilhaft besteht der Funktionsgenerator 50 aus einem Spannungsfrequenzumsetzer 55, der mit dem Zähleingang C eines Zählers 56, z. B. eines rücksetzbaren 7-Bit-Zählers 56, verbunden ist. Mit dem Zählerstand wird ein Festwertspeicher 57 adressiert, in dem die Kurvenform abgespeichert ist. Im vorliegenden Fall ist jede Periode in 120 Zählschritte unterteilt, so dass die zeitlichen Abstände der vom Frequenzumsetzer 55 erzeugten Zählimpulse jeweils einer um 3° el. fortschreitenden Phase in der Steuerspannung entsprechen und im Speicher 57 jeweils nach 3° ein neuer Speicherplatz angesteuert wird, in dem der jeweils zur betreffenden Phase gehörende Wert der binären Steuerspannung gespeichert ist. Die Auflösung der Steuerspannung beträgt also 3°. Mit dem 120. Zählschritt des Zählers 56 ist jeweils eine Periode beendet und in dem entsprechenden Speicherplatz ist ein Rücksetzimpuls abgelegt, der über die Leitung 58 an den Rücksetzeingang des Zählers 56 gegeben wird und somit einen neuen Zyklus für die nächste Periode einleitet. Vorteilhaft ist im Festwertspeicher 57 für jeden der Wechselrichterschalter eine eigene, entsprechend phasenverschobene Sollspannung abgelegt und der Festwertspeicher liefert bei jeder Ansteuerung durch den Zähler 56 über getrennte Ausgänge diese Sollspannungen an die Logikschaltung 54. Die Logikschaltung 54 kann dann vorteilhaft für jeden der Wechselrichterschalter ein EXKLUSIV-ODER-Gatter enthalten, dem lediglich die entsprechende Steuerspannung aus dem Festwertspeicher 57 und die pulsbreitenmodulierten Impulse des Schwellwertdetektors 53 zugeführt zu werden brauchen.

Der Aufbau dieser Steuerung ist besonders einfach, da er mit nur einem einzigen Festwertspeicher und einem einzigen, einfachen Analog/Digital-Wandler (Spannungsfrequenzumsetzer 55) auskommt.

Somit steht eine drehzahlregelbare Umwälzpumpe zur Verfügung, die sowohl bezüglich der Anschaffungskosten, wie auch der Energieeinsparung und der Geräuschentwicklung und der Wartungsfreiheit alle Erfordernisse eines Gebrauchsartikels für den breiten Einsatz bei Heizungsanlagen erfüllt.

## Patentansprüche

1. Verfahren zum Umwälzen des Wärmeträgers in einem Heizungsrohrsystem mittels einer Umwälzpumpe, gekennzeichnet durch die folgenden Merkmale:

a) Die Umwälzpumpe wird von einer Asynchronmaschine mit einer von der Heizlast des Heizungsrohrsystems abhängigen Drehzahl angetrieben;

b) die Asynchronmaschine wird über einen Spannungszwischenkreisumrichter mit Pulswechselrichter aus einem Wechselspannungsnetz mit einer gepulsten Wechselspannung gespeist, deren Frequenz proportional der gewünschten Drehzahl und deren Amplitude zumindest im oberen Drehzahlbereich ebenfals proportional der gewünschten Drehzahl ist;

c) für jeden Wechselrichterausgang ist jeweils eine Sollspannung mit einer binären, allen Ausgängen gemeinsamen und für alle Drehzahlen fest vorgegebenen Kurvenform gebildet, die bis auf Lücken in Nähe der Grundschwingungs-Nulldurchgänge in der ersten Halbperiode den einen binären Zustand und in der zweiten Halbperiode den anderen binären Zustand aufweist, wobei in jeder Halbperiode die Breite des lückenfreien Mittelbereiches wesentlich grösser ist als die Summe der Lückenbreiten und die Lücken symmetrisch um die Halbperiodenmitte vorgegeben sind, und

d) aus der jeweiligen Sollspannung und einer hochfrequenten Tastspannung von über 5 kHz wird ein pulsbreitenmoduliertes Steuersignal zum Umschalten des auf den entsprechenden Wechselrichterausgang arbeitenden Wechselrichterschalter gebildet, wobei das Pulsbreitenverhältnis entsprechend der gewünschten Amplitude vorgegeben ist.

2. Verfahren nach Anspruch 1, dadurch gekennzeichnet, dass die Drehzahl abhängig von der Fördermenge und/oder dem Förderdruck gesteuert oder geregelt wird.

3. Verfahren nach Anspruch 1 oder 2, dadurch gekennzeichnet, dass die Hochfrequenz der Tastspannung über 5 kHz beträgt.

4. Verfahren nach Anspruch 3, dadurch gekennzeichnet, dass die Tastspannung drehzahlunabhängig, insbesondere zu etwa 6 kHz, vorgegeben wird.

5. Verfahren nach einem der Ansprüche 1 bis 4, dadurch gekennzeichnet, dass ein Pulswechselrichter mit Wechselrichterschaltern aus Leistungstransistoren verwendet wird.

6. Antriebsvorrichtung für eine Umwälzpumpe zur Durchführung des Verfahrens nach einem der Ansprüche 1 bis 5, gekennzeichnet durch

a) eine Asynchronmaschine (10) und einen an ein Wechselspannungsnetz (13) angeschlossenen Umrichter mit einem Spannungszwischenkreis (21) und einem Pulswechselrichter (20) zur Speisung der Asynchronmaschine, dessen Wechselrichterschalter aus Leistungstransistoren (31, 32) bestehen;

b) einen Drehzahlgeber (23) zur Erzeugung eines Drehzahlsollwertes in Abhängigkeit von der Heizleistung;

c) eine dem Drehzahlgeber nachgeschaltete Wechselrichtersteuerung (24) mit

– einem ersten Funktionsgeber (50) zum Erzeugen einer binären Sollspannung mit einer dem Drehzahlsollwert entsprechenden Frequenz und einer frequenzunabhängigen Kurvenform,

– einem zweiten Funktionsgeber (51) zum Erzeugen einer hochfrequenten Testspannung von über 5 kHz,

– einer Modulationsstufe (52, 53), die durch Vergleich der Tastspannung mit einer vom Drehzahlsollwert abhängigen Amplitudensteuerung pulsbreitenmodulierte Impulse erzeugt, und

– einer Logikschaltung (54), die aus der binären Sollspannung und den pulsbreitenmodulierten Impulsen pulsbreitenmodulierte Steuerspannungen für die Umschaltung eines Wechselrichterschalters liefert, wobei

– Mittel vorgesehen sind, um für die Umschaltung der anderen Wechselrichterschalter phasenverschobene pulsbreitenmodulierte Steuerspannungen zu bilden.

7. Vorrichtung nach Anspruch 6, dadurch gekennzeichnet, dass der erste Funktionsgeber (50) aus einem vom Drehzahlsollwert gespeicherten binären Oszillator (55) zur Bildung von Zählimpulsen für einen nachgeschalteten Zähler (56) und einem vom Zählerstand adressierten Festwertspeicher (57) besteht, wobei im Festwertspeicher für jeden Wechselrichterschalter eine eigene binäre Sollspannung gespeichert ist und bei jeder Ansteuerung durch den Zählerstand der entsprechende Wert aller Sollspannungen ausgelesen wird,

dass der zweite Funktionsgenerator (51) ein hochfrequenter Dreieckgenerator mit vorgegebener konstanter Frequenz ist,

dass die Modulationsstufe aus einem Kennliniengeber (52), der zu dem eingegebenen Drehzahlsollwert eine Amplitudensteuerspannung erzeugt, und einem von der Amplitudensteuerspannung als Schwellwert und von der Dreieckspannung beaufschlagten Schwellwertdetektor besteht, und dass die Logikschaltung (54) für jede Sollspannung zur Bildung der pulsbreitenmodulierten Steuerspannung der betreffenden Wechselrichterschalter ein EXKLUSIV-ODER-Gatter enthält, dem die Sollspannung und die am Schwellwertdetektor abgegriffenen pulsbreitenmodulierten Impulse zugeführt sind.

**Claims**

1. A method of circulating heating fluid in a heating tube system by means of a circulating pump, characterised by the following features:

a) the circulating pump is driven by an asynchronous machine at a speed dependent upon the heating load of the heating tube system;

b) the asynchronous machine is fed with a plused alternating voltage from an alternating voltage supply network by an intermediate voltage converter with a pulsed inverter circuit, the alternating voltage having a frequency proportional to the required speed and an amplitude that is proportional to the required speed, at least in the upper speed range;

c) the formation of a theoretical voltage having a binary waveform common to all outputs and firmly predetermined for all speeds, for each inverter output, which theoretical voltage has one binary state in the first half-cycle and the other binary state in the second half-cycle, with the exception of gaps in the vicinity of the fundamental oscillation zero passages wherein during each half-cycle the width of the central range which is free from gaps is substantially greater than the sum of the gap widths and the gaps are symmetrically arranged around the half-cycle centre, and

d) the formation of a pulse-width modulated signal for switching the inverter circuit which operates towards the corresponding inverter output, this signal being formed from the respective theoretical voltage and high-frequency keying voltage of over 5 kHz, where the pulse width ratio corresponds to the required amplitude.

2. A method as claimed in claim 1, characterised in that the speed is controlled or regulated in dependence upon the quantity delivered and/or discharge pressure.

3. A method as claimed in claim 1 or 2, characterised in that the high frequency of the keying voltage is over 5 kHz.

4. A method as claimed in claim 3, characterised in that the keying voltage is independent of the speed, being in particular approximately 6 kHz.

5. A method as claimed in one of claims 1 to 4, characterised in that a pulsed inverter with power transistor inverter circuits is used.

6. A driving device for a circulating pump for implementation of the method as claimed in one of claims 1 to 5, characterised by

a) an asynchronous machine (10) and an inverter connected to an alternating voltage supply network (13) and has an intermediate voltage circuit (21) and a pulsed inverter (20) for feeding the asynchronous machine, and whose inverter circuits consist of power transistors (31, 32);

b) a tachometer (23) for producing a theoretical speed value in dependence upon the heating load;

c) an inverter control unit (24) which is connected following the tachometer and comprises

– a first function generator (50) for producing a binary theoretical voltage which has a frequency corresponding to the theoretical value of the speed, and which has a frequency-independent waveform,

– a second function generator (51) for producing a highfrequency keying voltage of over 5 kHz,

– a modulation stage (52, 53) which by comparison of the keying voltage with an amplitude control voltage which is dependent upon the theoretical value of the speed, produces pulse-width modulated pulses, and

– a logic circuit (54) which supplies pulse-width modulated control voltages for the switching of an inverter circuit from the binary theoretical voltage and the pulse-width modulated pulses, where

– means are provided in order to form phase-shifted pulse-width modulated control voltages for the switching of the other inverter circuits.

7. A device as claimed in claim 6, characterised in that the first function generator (50) consists of a binary oscillator (55) which is fed from the theoretical speed value and which serves to form counting pulses for a following counter (56) and a read-only memory (57) which is addressed by the counter position, where in the read-only memory a separate binary theoretical voltage is stored for each inverter circuit and during each control by the counter position the corresponding value of all theoretical voltages is read out, that the second function generator (51) is a high-frequency triangular generator having a predetermined constant frequency,

that the modulation stage consists of a characteristic generator (52) which produces an amplitude control voltage in relation to the input theoretical speed value, and of a threshold value detector which is acted upon by the amplitude control voltage as a threshold value and by the triangular voltage, and

that in order to form the pulse-width modulated control voltage of the respective inverter circuits the logic circuit (54) comprises an EXCLUSIVE-OR gate for each theoretical voltage, to which gate the theoretical voltage and the pulse-width modulated pulses tapped at the threshold value detector are supplied.

**Revendications**

1. Procédé pour entraîner en circulation le fluide caloporteur dans un système de conduites de chauffage au moyen d'une pompe de circulation, caractérisé par les caractéristiques suivantes:

a) la pompe de circulation est entraînée par une machine asynchrone possédant une vitesse de rotation dépendant de la charge de chauffage du système de conduites de chauffage;

b) la machine asynchrone est alimentée au moyen d'un mutateur comportant un circuit intermédiaire de tension et un onduleur délivrant des impulsions, à partir d'un réseau à tension alternative, par une tension alternative pulsatoire, dont la fréquence est proportionnelle à la vitesse de rotation désirée et dont l'amplitude est également proportionnelle à la vitesse de rotation désirée, au moins dans la gamme supérieure des vitesses de rotation;

c) pour chaque sortie de l'onduleur il est prévu respectivement une tension de consigne possédant une forme de courbe binaire, commune à toutes les sorties et prédéterminée de façon fixe pour toute la vitesse de rotation et qui possède, hormis au niveau d'intervalles vides à proximité des points d'annulation de l'oscillation fondamentale pendant la première alternance, un étant binaire et, pendant la seconde alternance, l'autre état binaire, la largeur de la zone centrale sans intervalle vide, pendant chaque demi-période, étant supérieure à la somme des durées des intervalles vides, et les intervalles vides étant prédéterminés de manière à être symétriques par rapport au centre de l'alternance, et

d) un signal de commande modulé selon une modulation d'impulsions en durée est formé, à partir de la tension de consigne respective et à partir d'une tension de manipulation selon une fréquence élevée supérieure à 5 kHz, en vue de réaliser la commutation du commutateur de l'onduleur, agissant sur le signal de sortie correspondant de l'onduleur, le rapport des durées d'impulsions étant prédéterminé en fonction de l'amplitude désirée.

2. Procédé suivant la revendication 1, caractérisé par le fait que la vitesse de rotation est commandée ou réglée en fonction du débit de circulation et/ou de la pression de refoulement.

3. Procédé suivant la revendication 1 ou 2, caractérisé par le fait que la haute fréquence de la tension de manipulation est supérieure à 5 kHz.

4. Procédé suivant la revendication 3, caractérisé par le fait que la tension de manipulation est prédéterminée d'une manière indépendante de la vitesse de rotation, à une valeur égale notamment à environ 6 kHz.

5. Procédé suivant l'une des revendications 1 à 4, caractérisé par le fait qu'on utilise un onduleur délivrant des impulsions comportant des commutateurs formés de transistors de puissance.

6. Dispositif d'entraînement pour une pompe de circulation pour la mise en œuvre du procédé suivant l'une des revendications 1 à 5, caractérisé par

a) une machine asynchrone (10) et un mutateur raccordé à une réseau à tension alternative (13) et comportant un circuit intermédiaire de tension (21) et un onduleur (20) délivrant des impulsions et servant à alimenter la machine asynchrone et dont les commutateurs sont constitués par des transistors de puissance (31, 32);

b) un capteur de la vitesse de rotation (23) servant à délivrer une valeur de consigne de la vitesse de rotation en fonction de la puissance de chauffage;

c) un dispositif (24) de commande de l'onduleur, branché en aval du capteur de la vitesse de rotation et comportant:

– un premier générateur de fonction (50) servant à produire une tension de consigne binaire possédant une fréquence correspondant à la valeur de consigne de la vitesse de rotation, et une forme du courbe indépendant de la fréquence,

– un second générateur de fonction (51) servant à produire une tension de manipulation d'une fréquence élevée supérieure à 5 kHz,

– un étage de modulation (52, 53), qui produit des impulsions modulées selon une modulation d'impulsions en durée, par comparaison de la tension de manipulation à une tension de commande d'amplitude dépendant de la valeur de consigne de la vitesse de rotation, et

– un circuit logique (54) qui délivre, à partir de la tension de consigne binaire et des impulsions modulées selon une modulation d'impulsions en largeur, des tensions de commande modulées selon une modulation d'impulsions en durée et servant à réaliser la commutation d'un commutateur de l'onduleur,

— des moyens étant prévus pour former des tensions de commande déphasées démodulées selon une modulation d'impulsions en durée, pour la commutation des autres commutateurs de l'onduleur.

7. Dispositif suivant la revendication 6, caractérisé par le fait que le premier générateur de fonction (50) est constitué par un oscillateur binaire (55) alimenté par la valeur de consigne de la vitesse de rotation et servant à former des impulsions de comptage pour un compteur (56) branché en aval, et par une mèmoire morte (57) adressée par l'état de comptage, une tension de consigne binaire particulière étant mémorisée dans la mémoire morte pour chaque commutateur de l'onduleur et la valeur correspondante de toutes les tensions de consigne étant extraite par lecture lors de chaque commande réalisée par l'état de comptage,

que le second générateur de fonction (51) est un générateur de signal en triangle possédant une fréquence élevée constante prédéterminée,

que l'étage de modulation est constitué par un générateur de courbes caractéristiques (52), qui produit une tension de commande d'amplitude en rapport avec la vitesse de consigne introduite de la vitesse de rotation, et par un détecteur à valeur de seuil chargé par la tension de commande d'amplitude servant de valeur de seuil et par la tension en triangle, et

que le circuit logique (54) contient pour chaque tension de consigne, pour former la tension de commande modulée selon une modulation d'impulsions en durée, des commutateurs concernés de l'onduleur, une porte OU-EXCLUSIF à laquelle sont envoyées la tension de consigne et les impulsions modulées selon une modulation d'impulsions en durée et prélevées du détecteur à valeur de seuil.

FIG 1

FIG 2

0088277

FIG 3

13

FIG 4

FIG 5